# EUROPEAN PATENT APPLICATION

(11) **EP 4 404 326 A1**
(43) Date of publication of application: **24.07.2024**
(21) Application number: 21957784.8
(22) Date of filing: 23.09.2021
(51) Int. Cl.: H01M 10/42, H01M 10/615, G01M 3/16

(54) **BATTERY, ELECTRIC DEVICE, AND MANUFACTURING METHOD FOR BATTERY**

(71) Applicant: Contemporary Amperex Technology Co., Limited, Jiaocheng District Ningde Fujian 352100 (CN)
(72) Inventor: WANG, Lei, Ningde, Fujian 352100 (CN); CHEN, Xingdi, Ningde, Fujian 352100 (CN); WANG, Peng, Ningde, Fujian 352100 (CN); WANG, Xingchang, Ningde, Fujian 352100 (CN)
(74) Representative: Gong, Jinping
(86) International application number: PCT/CN2021/119808
(87) International publication number: WO 2023/044647

(57) **Abstract**

Embodiments of this application provide a battery, an electric device, and a battery manufacturing method. The battery includes a housing (1), a battery cell (2), a liquid cooling system (3), and a detection apparatus (5), where the housing (1) has a bottom plate (11), the battery cell (2) is disposed inside the housing (1), the liquid cooling system (3) is configured to cool the battery cell (2) by using a coolant, and the detection apparatus (5) is configured to detect coolant leaked from the liquid cooling system (3), where the detection apparatus (5) includes a detection part with a detection position set between the battery cell (2) and the bottom plate (11). The electric device includes the battery. In this application, the detection part can effectively protect battery cells and prevent battery safety accidents, improving the safety performance of the battery.

## Description

### TECHNICAL FIELD

This application relates to the field of battery technologies, and in particular, to a battery, an electric device, and a battery manufacturing method.

### BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

During use of a battery, a coolant inside the battery for cooling battery cells may escape, affecting the safety performance of the battery.

### SUMMARY

This application provides a battery, an electric device, and a battery manufacturing method, so as to quickly detect coolant leaks and improve the safety performance of the battery.

According to a first aspect, this application provides a battery including:
a housing having a bottom plate;
a battery cell disposed inside the housing;
a liquid cooling system configured to cool the battery cell by using a coolant; and
a detection apparatus configured to detect coolant leaked from the liquid cooling system, where the detection apparatus includes a detection part with a detection position set between the battery cell and the bottom plate.

In a battery embodiment provided in this application, the detection position of the detection part included in the detection apparatus is set between the battery cell and the bottom plate. In the event of a coolant leak, the detection part can detect the coolant before the coolant comes into contact with the battery cell. This prevents the battery cell from being soaked in the coolant and protects electrical components of the battery cell against short circuit or damage, effectively protecting the battery cell and increasing the service life of the battery cell. This can also prevent battery safety accidents, improving the safety performance of the battery.

In some embodiments, the detection position of the detection part is 1 mm to 5 mm above the bottom plate. This range of distance can facilitate the arrangement of the detection apparatus, and can also ensure that a coolant leak is detected before the coolant comes into contact with the battery cell, effectively protecting the battery cell.

In some embodiments, the detection part is disposed on the bottom plate. The benefit of such arrangement is that the coolant can be detected in the first place, and a coolant leak can be detected as quickly as possible, preventing the coolant from soaking components near the bottom plate.

In some embodiments, the battery further includes a spacer plate disposed between the battery cell and the bottom plate, where the spacer plate has a recess with an opening facing the bottom plate, the detection apparatus includes a terminal disposed in the recess, and the terminal is connected to the detection part.

With the spacer plate and the recess on the spacer plate, the terminal can be hidden in the recess, so that the problem of interfering with the assembly caused by a terminal exposed on a surface of the spacer plate can be avoided. This facilitates the assembly of the spacer plate.

In some embodiments, the detection part includes a probe connected to the terminal. The recess is located on an edge of the spacer plate and an open portion is formed at a side facing the edge, and the probe extends from the terminal in a direction away from the open portion.

The recess is provided so that the terminal can be pushed into the recess through the open portion on the edge of the spacer plate. The open portion helps position the terminal and guide the mounting of the terminal, greatly facilitating the mounting of the detection apparatus. The probe extends from the terminal in the direction away from the open portion, so that an end portion of the probe can be placed at a side of the terminal away from the open portion. In this way, the probe is effectively protected by the side wall of the recess and prevented from reaching out of the recess or spacer plate to rub against or collide with other components inside the battery. Such rub or collision will compromise the safety of the probe and shorten the service life of the probe.

In some embodiments, the battery further includes a first electrical connection wire, a second electrical connection wire, and a battery management system, where the detection part includes a first probe and a second probe, the first electrical connection wire connects the first probe and the battery management system, and the second electrical connection wire connects the second probe and the battery management system.

The first electrical connection wire, the second electrical connection wire, and the battery management system are provided, so that the first probe and the second probe connected via the coolant can be connected to the battery management system through the first electrical connection wire and the second electrical connection wire. Then, the battery management system can determine whether the coolant is detected based on the change of connectivity between the two probes.

In some embodiments, the first probe, the first electrical connection wire, and the battery management system are connected to form a first branch, the first branch is provided with a first voltage terminal, and the first voltage terminal is configured to provide the first branch with a voltage of a first preset value; and the second probe, the second electrical connection wire, and the battery management system are connected to form a second branch, the second branch is provided with a second voltage terminal, the second voltage terminal is configured to provide the second branch with a voltage of a second preset value, and the battery management system is configured to determine whether the detection apparatus detects the coolant leaked from the liquid cooling system, by detecting a voltage difference between the first branch and the second branch.

The first voltage terminal is provided on the first branch to provide the voltage of the first preset value for the first branch, and the second voltage terminal is provided on the second branch to provide the voltage of the second preset value for the second branch, so that whether a coolant leak occurs can be determined by detecting a difference between the voltages of the two branches.

In some embodiments, the battery further includes a first resistor, a first capacitor, a second resistor, and a second capacitor, where the first resistor is connected to the first branch, one end of the first capacitor is connected to the first branch and another end of the first capacitor is grounded, the second resistor is connected to the second branch, and one end of the second capacitor is connected to the second branch and another end of the second capacitor is grounded.

The first resistor and the first capacitor form a first filter to filter out interfering signals of the first branch. The second resistor and the second capacitor form a second filter to filter out interfering signals of the second branch.

In some embodiments, the battery management system includes a processing module, and the processing module is configured to: when it is detected that an absolute value of the voltage difference between the first branch and the second branch is greater than or equal to an absolute value of a difference between U₁ and U₂, determine that the detection apparatus detects no coolant leaked from the liquid cooling system, where U₁ is an absolute value of a difference between the first preset value and the second preset value, and U₂ is 0-1 V; and when it is detected that the absolute value of the voltage difference between the first branch and the second branch is smaller than or equal to U₃, determine that the detection apparatus detects the coolant leaked from the liquid cooling system, where U₃ is 0-1 V and U₃ is smaller than the absolute value of the difference between U₁ and U₂.

In some foregoing embodiments of this application, the processing module can determine whether a coolant leak occurs based on the absolute value of the detected voltage difference. In addition, the determining criteria set in this embodiment of this application take into account the difference between the actual voltage difference and the theoretical voltage difference due to factors such as energy-consuming components or thermal consumption on the circuit, thereby effectively reducing the false alarm rate and increasing the detection accuracy.

In some embodiments, a distance between the first probe and the second probe is 5 mm to 10 mm. An excessively great distance between the two probes may affect the sensitivity of their connection. An excessively small distance between the two probes may lead to a mistaken connection.

In some embodiments, the first probe and the second probe are both cylindrical, and the first probe has a diameter of 0.5 mm to 3 mm and/or the second probe has a diameter of 0.5 mm to 3 mm. With the diameters of the probes set within that range, the detection requirements can be met and the volume of the detection apparatus can also be effectively controlled. This avoids the case that the detection apparatus is too large to be mounted easily, helping reduce costs.

According to a second aspect, this application provides an electric device including the foregoing battery, where the battery is configured to supply electric energy to the electric device.

The electric device provided in the embodiment of this application can quickly and accurately detect whether a coolant leak occurs or whether the leakage reaches a preset amount. This effectively protects the battery, improving the use safety of the electric device.

According to a third aspect, this application provides a battery manufacturing method including:
providing a housing having a bottom plate;
providing a battery cell, with the battery cell disposed inside the housing;
providing a liquid cooling system for cooling the battery cell by using a coolant;
providing a detection apparatus for detecting coolant leaked from the liquid cooling system, where the detection apparatus includes a detection part; and
setting a detection position of the detection part to between the battery cell and the bottom plate.

The battery manufactured according to the battery manufacturing method embodiment of this application can quickly and accurately detect whether a coolant leak occurs or whether the leakage reaches a preset amount. This effectively protects the battery cell, improving the safety performance of the battery.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of an electric device disclosed in some embodiments of this application.
FIG. 2 is an exploded view of a battery disclosed in some embodiments of this application.
FIG. 3 is a schematic structural diagram of a battery disclosed in some embodiments of this application.
FIG. 4 is a schematic structural diagram of a battery without a bottom plate disclosed in some embodiments of this application.
FIG. 5 is an enlarged view of part A marked in FIG. 4.
FIG. 6 is a schematic diagram of a partial structure of a spacer plate in a battery disclosed in some embodiments of this application.
FIG. 7 is an enlarged view of part B marked in FIG. 6.
FIG. 8 is a schematic structural diagram of a detection apparatus in a battery disclosed in some embodiments of this application.
FIG. 9 is a bottom view of a detection apparatus in a battery disclosed in some embodiments of this application.
FIG. 10 is a side view of a detection apparatus in a battery disclosed in some embodiments of this application.
FIG. 11 is a schematic circuit diagram of a battery disclosed in some embodiments of this application before a coolant leak is detected.
FIG. 12 is a schematic circuit diagram of a battery disclosed in some embodiments of this application when a coolant leak is detected.

The accompanying drawings are not drawn to scale.

Reference signs are described as follows:
1000: vehicle; 100: battery; 200: controller; 300: motor;
1: housing; 11: bottom plate; 12: housing body; 2: battery cell; 3: liquid cooling system; 4: spacer plate; 41: recess; 5: detection apparatus; 51: terminal; 52: first probe; 53: second probe; 54: first electrical connection wire; 55: second electrical connection wire; 6: mounting plate; 61: clearance; 71: first hook; 72: second hook; 81: first positioning piece; 82: second positioning piece; 90: third resistor; 91: first branch; 92: first voltage terminal; 93: second branch; 94: second voltage terminal; 95: first resistor; 96: first capacitor; 97: second resistor; 98: second capacitor; and 99: fourth resistor.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application belongs. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In addition, the term "Vertical" means being vertical with an allowable range of error other than being strictly vertical. "Parallel" is not parallel in the strict sense but within an allowable range of error.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of some embodiments of this application, the term "a plurality of" means at least two unless otherwise specifically stated. Similarly, "a plurality of groups" means more than two groups and "a plurality of pieces" means more than two pieces unless otherwise specifically stated.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the descriptions of embodiments of this application, unless otherwise specified and defined explicitly, the technical terms "installment", "link", "connection", and "fix" should be understood in their general senses. For example, the terms may be a fixed connection, a detachable connection, or an integrated connection; or may be a mechanical connection or an electrical connection; or may be a direct connection, or an indirect connection through an intermediate medium; or may be an internal connection between two components or an interactive relationship between two components. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

A thermal management system is provided in the battery for adjusting the operating temperature of the battery. Typically, the thermal management system uses a liquid cooling system for temperature control of the battery. The liquid cooling system includes a liquid cooling plate and a water pipe, where the water pipe is disposed on the liquid cooling plate and is filled with a coolant. The coolant flows in the water pipe and the liquid cooling plate to cool the battery.

The inventors of this application have noticed that the battery has a risk of coolant leak during use. A coolant leak may cause short circuit or damage of electrical components inside the battery, which shortens the service life of the battery and may also cause safety accidents and endanger personal safety.

Through further research, the inventors have found that in existing related technologies, whether a coolant leak occurs is determined through insulation checking by a battery management system (BMS). However, for a battery placed upside down, an insulation alarm will not be triggered after a coolant leak if the battery cell is not in contact with the coolant. When the BMS triggers the insulation alarm, high-voltage electrical components inside the battery have been soaked in the coolant, causing a safety risk of high-voltage failure. It can be seen that the detection methods in related technologies are somewhat lagging behind and may still cause high safety risks.

Based on the foregoing research, the inventors have improved the structure of the battery, and the improved battery can detect a coolant leak in the first place, ensuring the use safety of the battery.

According to a battery embodiment provided in this application, the coolant can be quickly detected, avoiding the case that an alarm is triggered after the electrical components inside the battery have been soaked in the coolant. This greatly improves the detection sensitivity, thereby effectively improving the safety performance of the battery.

An embodiment of this application provides an electric device using a battery as a power source, where the battery is configured to supply electric energy to the electric device. The electric device may be a mobile phone, a portable device, a notebook computer, an electric bicycle, an electric vehicle, a steamship, a spacecraft, an electric toy, an electric tool, or the like. For example, the spacecraft includes an airplane, a rocket, a space shuttle, a spaceship, or the like. The electric toy includes a fixed or mobile electric toy, such as a game console, an electric vehicle toy, an electric ship toy, and an electric airplane toy. The electric tool includes an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, and an electric planer.

For ease of description, an example in which the electric device is a vehicle 1000 according to an embodiment of this application is used for description in the following embodiments.

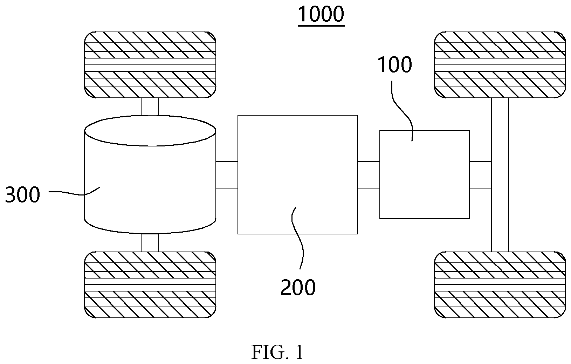

Referring to FIG. 1, FIG. 1 is a schematic structural diagram of a vehicle 1000 used as the electric device according to some embodiments of this application. The vehicle 1000 may be an oil-fueled vehicle, a gas-powered vehicle, or a new energy vehicle. The new energy vehicle may be a battery electric vehicle, a hybrid electric vehicle, an extended-range electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the battery 100 is configured to supply electric energy to the motor 300 and other components of the vehicle, and the controller 200 is configured to control the operation of the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

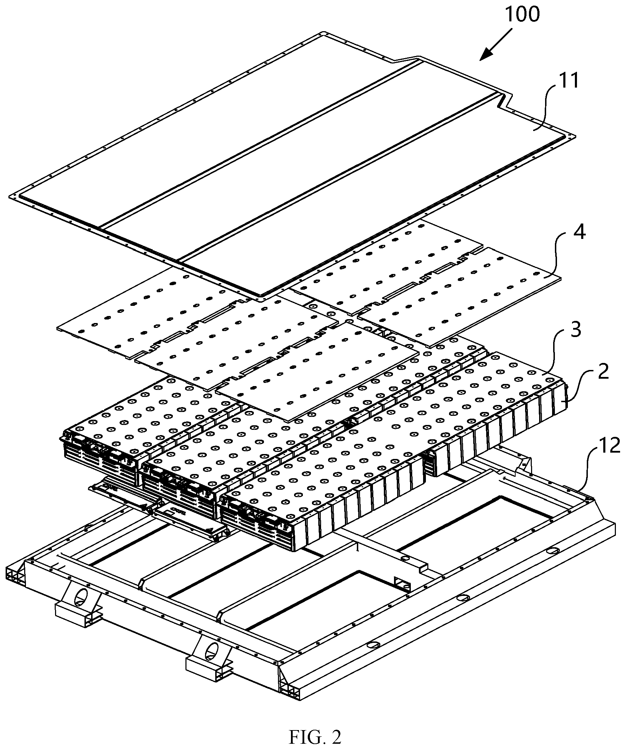

Referring to FIG. 2, FIG. 2 is an exploded view of a battery 100 according to some embodiments of this application. The battery 100 includes a housing 1 and a battery cell 2, where the battery cell 2 is accommodated in the housing 1. The housing 1 is configured to provide an accommodating space for the battery cell 2, and the housing 1 may be of various structures.

In some embodiments, the housing 1 may include a bottom plate 11 and a housing body 12. The bottom plate 11 is a plate structure, and the housing body 12 is a hollow structure with one side open. The bottom plate 11 covers the open side of the housing body 12, and the bottom plate 11 and the housing body 12 jointly define a space for accommodating the battery cells 2.

In some other embodiments, the bottom plate 11 may alternatively be a non-plate structure. For example, the bottom plate 11 and the housing body 12 may each be a hollow structure with one side open, and the open side of the bottom plate 11 covers the open side of the housing body 12. Certainly, the housing 1 formed by the bottom plate 11 and the housing body 12 may be in various shapes such as a cylinder and a cuboid.

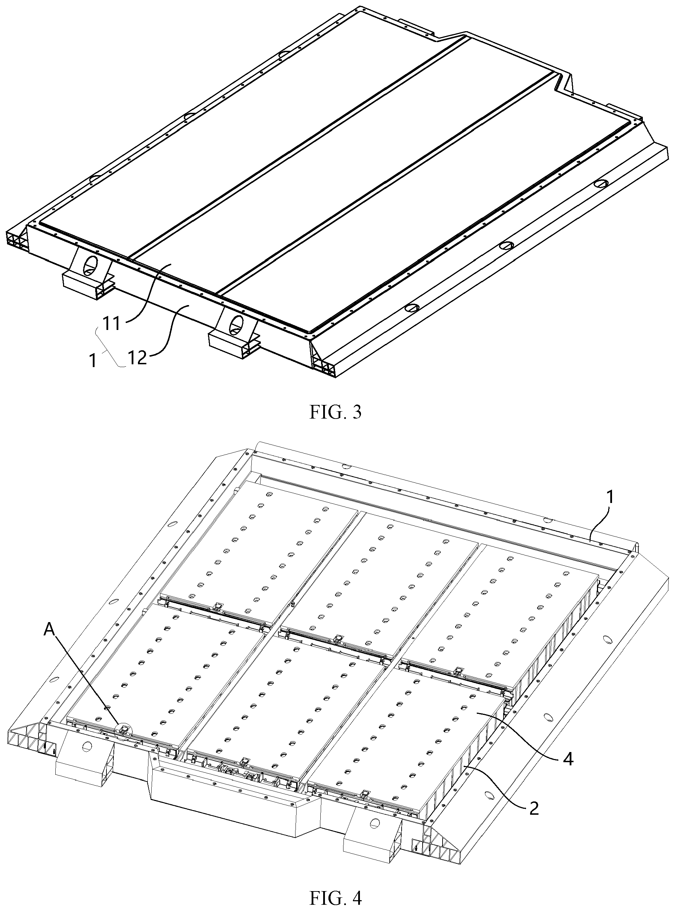

FIG. 3 is a schematic structural diagram of an assembled battery 100. During use, the battery 100 is turned upside down as compared to the state shown in FIG. 3 and then placed. In this case, the bottom plate 11 is at the bottom of the housing body 12.

In the battery 100, a plurality of battery cells 2 may be provided, and the plurality of battery cells 2 may be connected in series, parallel, or series-parallel, where a series-parallel connection refers to a combination of series and parallel connections among the plurality of battery cells 2. The plurality of battery cells 2 may be directly connected in series, parallel, or series-parallel, and then an entirety of the plurality of battery cells 2 is accommodated in the housing 1. Alternatively, the battery 100 may be obtained by accommodating in the housing 1 a plurality of battery modules connected in series, parallel, or series-parallel, where each of the battery modules is formed by connecting a plurality of battery cells 2 in series, parallel, or series-parallel. The battery 100 may further include other structures. For example, the battery 100 may further include a busbar configured to implement electrical connection between the plurality of battery cells 2.

The battery cell 2 may include a lithium-ion secondary battery, a lithium-ion primary battery, a lithium-sulfur battery, a sodium/lithium-ion battery, a sodium-ion battery, a magnesium-ion battery, and the like, which is not limited in this embodiment of this disclosure. The battery cell may be cylindrical, flat, or cuboid, or of other shapes, which is not limited in this embodiment of this disclosure either. The battery cell is usually categorized into three types depending on the packaging: a cylinder battery cell, a prismatic battery cell, and a pouch battery cell, which is not limited in this embodiment of this disclosure.

The battery cell 2 is the smallest unit forming a battery. Various options may be available for the structure of the battery cell 2, and details will not be described in this application regarding the specific structure of the battery cell 2.

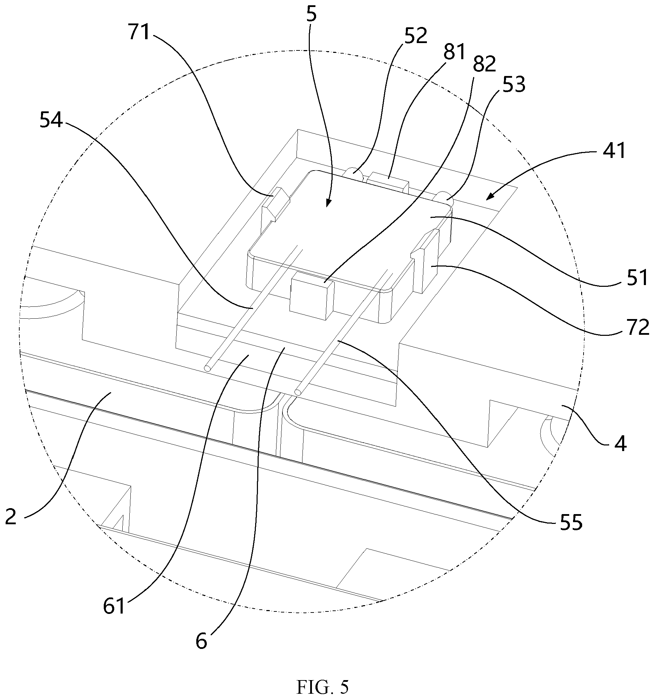

According to some embodiments of this application, refer to FIG. 4 and FIG. 5. FIG. 4 is a schematic structural diagram of the battery without the bottom plate 11 according to the embodiment illustrated in FIG. 3, and FIG. 5 is an enlarged view of part A marked in FIG. 4. This application provides a battery 100, and the battery 100 includes a housing 1, a battery cell 2, a liquid cooling system 3, and a detection apparatus 5.

The housing 1 has a bottom plate 11, the battery cell 2 is disposed inside the housing 1, the liquid cooling system 3 is configured to cool the battery cell 2 by using a coolant, and the detection apparatus 5 is configured to detect coolant leaked from the liquid cooling system 3, where the detection apparatus 5 includes a detection part with a detection position set between the battery cell 2 and the bottom plate 11, so that the detection apparatus 5 can detect the leaked coolant before the leaked coolant comes into contact with the battery cell 2.

In a battery embodiment provided in this application, the detection position of the detection part included in the detection apparatus 5 is set between the battery cell 2 and the bottom plate 11. In the event of a coolant leak, the detection part can detect the coolant before the coolant comes into contact with the battery cell 2. This prevents the battery cell 2 from being soaked in the coolant and protects electrical components of the battery cell 2 against short circuit or damage, effectively protecting the battery cell 2 and increasing the service life of the battery cell 2. This can also prevent battery safety accidents, improving the safety performance of the battery.

The detection position of the detection part is a position where the detection part can detect the coolant. When the coolant reaches the detection position, the detection part detects the coolant and determines that a coolant leak occurs.

In related technologies, a coolant leak is detected through insulation checking. In an embodiment of this application, the detection position of the detection part included in the detection apparatus 5 is set between the battery cell 2 and the bottom plate 11, so that a coolant leak can be detected before the coolant comes into contact with the battery cell 2, effectively protecting the battery cell 2. The battery provided in this embodiment of this application has a higher sensitivity in detecting coolant leaks. This can prevent safety accidents as early as possible, and improves the use safety of the battery.

The bottom plate 11 is at the bottom of the housing 1. During a coolant leak, the liquid level of the coolant will gradually rise from the bottom plate 11. With the detection position of the detection part set between the battery cell 2 and the bottom plate 11, the coolant can be detected in the first place.

In some embodiments, the detection position of the detection part is above the bottom plate 11, and a distance between the detection position of the detection part and the bottom plate 11 is 1 mm to 5 mm, for example, 1 mm, 2 mm, 3 mm, 4 mm, or 5 mm. This range of distance can facilitate the arrangement of the detection apparatus 5, and can also ensure that a coolant leak is detected before the coolant comes into contact with the battery cell 2, effectively protecting the battery cell 2.

In some embodiments, the detection part is disposed on the bottom plate 11. The benefit of such arrangement is that the coolant can be detected in the first place, and a coolant leak can be detected quickly. Once the coolant is present on the bottom plate 11, the coolant leak can be detected, preventing the coolant from soaking components near the bottom plate 11.

As shown in FIG. 2 and FIG. 5, in some embodiments of this application, the battery further includes a spacer plate 4 disposed between the battery cell 2 and the bottom plate 11, where the spacer plate 4 has a recess 41 with an opening facing the bottom plate 11, the detection apparatus 5 includes a terminal 51 disposed in the recess 41, and the terminal 51 is connected to the detection part.

With the spacer plate 4 and the recess 41 on the spacer plate 4, the terminal 51 can be hidden in the recess 41, so that the problem of interfering with the assembly caused by the terminal 51 exposed on a surface of the spacer plate 4 can be avoided. This facilitates the assembly of the spacer plate 4.

In some embodiments, the liquid cooling system 3 is disposed between the spacer plate 4 and the battery cell 2. The spacer plate 4 may also serve as a supporting plate for the liquid cooling system 3, and a liquid transport tube in the liquid cooling system 3 can run through a through hole on the spacer plate 4.

In some embodiments, the spacer plate 4 may also serve as a mounting plate for other components, for example, a sensor for detecting the pressure on the bottom of the battery cell 2. In these embodiments, the detection apparatus 5 is mounted on the spacer plate 4 with a corresponding function, so that the detection apparatus 5 can be mounted using the existing structure, without the need of special mounting parts for the detection apparatus 5. This can reduce the number of parts of the battery, simplifying the internal structure and reducing costs.

In some embodiments, the detection part includes a probe connected to the terminal 51. The recess 41 is located on an edge of the spacer plate 4 and an open portion is formed at a side facing the edge, and the probe extends from the terminal 51 in a direction away from the open portion.

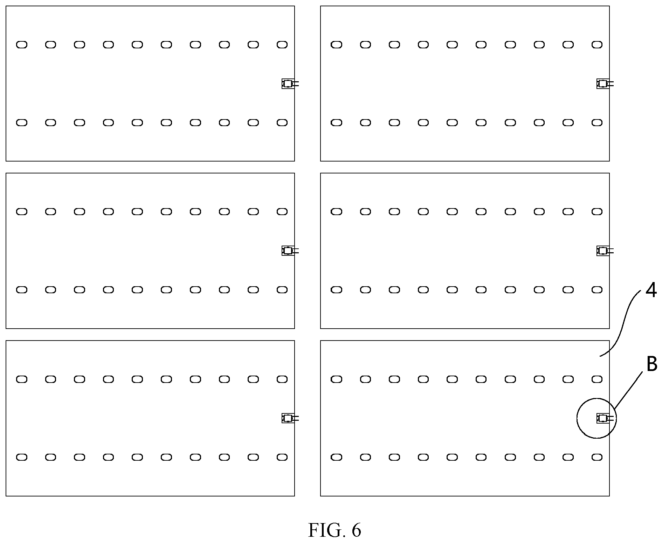

As shown in FIG. 6, the recess 41 is disposed on an edge of the spacer plate 4 and an open portion is formed at a side of the recess 41 facing the edge, so that the terminal 51 can be pushed into the recess 41 through the open portion on the edge of the spacer plate 4. The open portion helps position the terminal 51 and guide the mounting of the terminal 51, greatly facilitating the mounting of the detection apparatus 5.

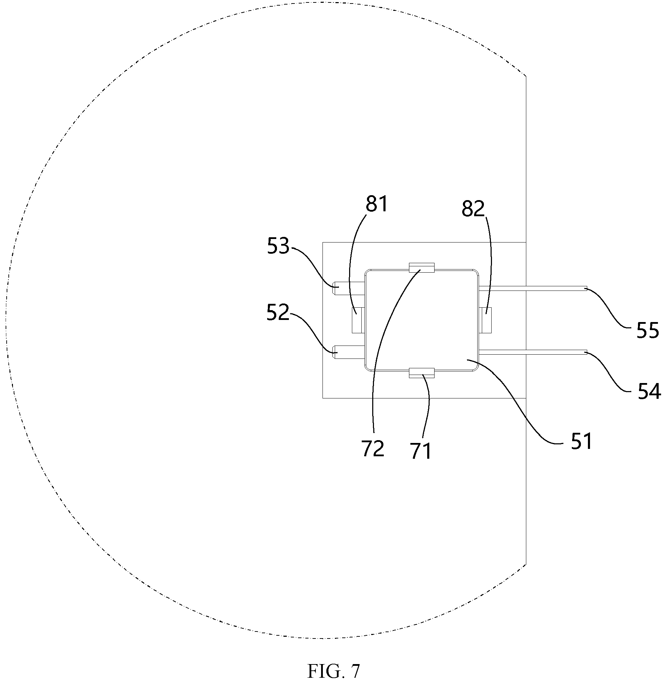

As shown in FIG. 7, the probe extends from the terminal 51 in the direction away from the open portion, so that an end portion of the probe can be placed at a side of the terminal 51 away from the open portion. In this way, the probe is effectively protected by the side wall of the recess 41 and is prevented from reaching out of the recess 41 or spacer plate 4 to rub against or collide with other components inside the battery. Such rub or collision will compromise the safety of the probe and shorten the service life of the probe.

In the embodiment where the detection part includes a probe, the probe comes into contact with the coolant first at the detection position of the detection part. For example, a position, on the outer surface of the probe, close to the bottom plate 11 is the detection position of the detection part, and the coolant being in contact with the position can be detected.

In some embodiments, the battery further includes a first electrical connection wire 54, a second electrical connection wire 55, and a battery management system, where the detection part includes a first probe 52 and a second probe 53, the first electrical connection wire 54 connects the first probe 52 and the battery management system, and the second electrical connection wire 55 connects the second probe 53 and the battery management system.

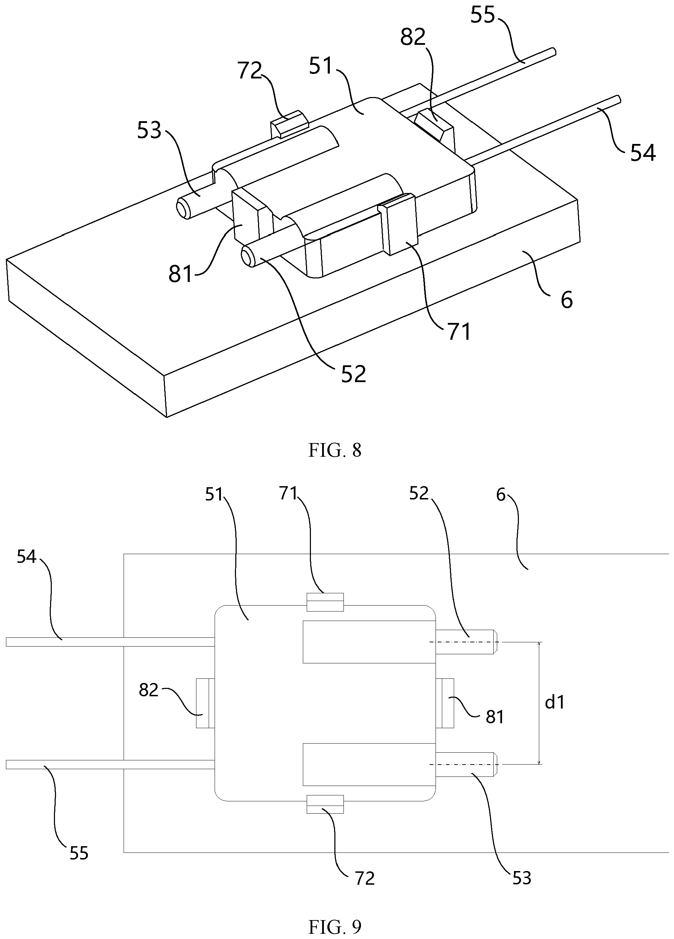

As shown in FIG. 8, FIG. 9, and FIG. 10, the first probe 52 and the second probe 53 extend in parallel directions. The first probe 52 and the second probe 53 are disconnected before the coolant is detected. When the liquid level of the coolant reaches the end portions of the first probe 52 and the second probe 53, the first probe 52 and the second probe 53 are electrically connected via the coolant, and are electrically connected to the battery management system through the first electrical connection wire 54 and the second electrical connection wire 55 respectively. After the first probe 52 and the second probe 53 are electrically connected, the battery management system can determine whether the coolant is detected based on the change of connectivity between the two probes.

There are many methods for the battery management system to determine whether the connectivity between the two probes has changed. The following describes one specific implementation.

In some embodiments, the first probe 52, the first electrical connection wire 54, and the battery management system are connected to form a first branch 91, the first branch 91 is provided with a first voltage terminal 92, and the first voltage terminal 92 is configured to provide the first branch 91 with a voltage of a first preset value; and the second probe 53, the second electrical connection wire 55, and the battery management system are connected to form a second branch 93, the second branch 93 is provided with a second voltage terminal 94, the second voltage terminal 94 is configured to provide the second branch 93 with a voltage of a second preset value, and the battery management system is configured to determine whether the detection apparatus 5 detects the coolant leaked from the liquid cooling system 3, by detecting a voltage difference between the first branch 91 and the second branch 93. In these embodiments, the battery management system determines whether the two probes are electrically connected based on the voltage difference between the two branches, and then determines whether the coolant is detected.

In some embodiments, the battery further includes a first resistor 95, a first capacitor 96, a second resistor 97, and a second capacitor 98, where the first resistor 95 is connected to the first branch 91, one end of the first capacitor 96 is connected to the first branch 91 and another end of the first capacitor 96 is grounded, the second resistor 97 is connected to the second branch 93, and one end of the second capacitor 98 is connected to the second branch 93 and another end of the second capacitor 98 is grounded.

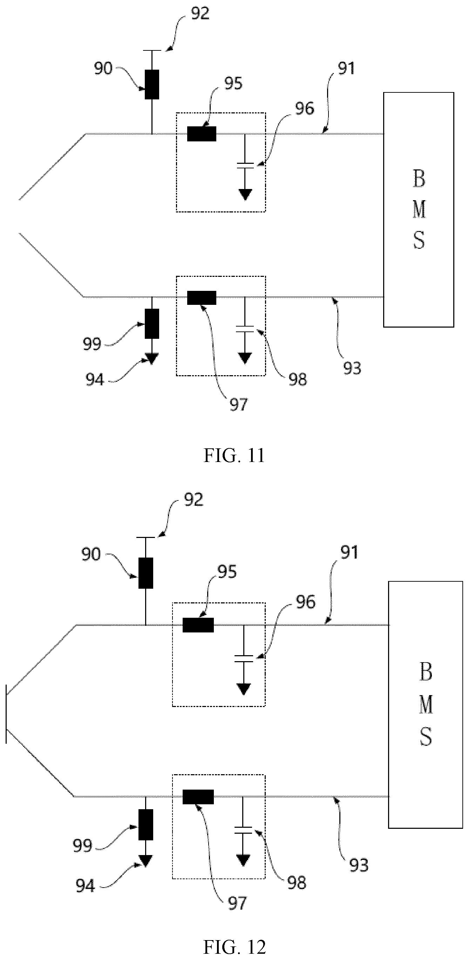

As shown in FIG. 11 and FIG. 12, the first resistor 95 and the first capacitor 96 form a first filter to filter out interfering signals of the first branch 91. The second resistor 97 and the second capacitor 98 form a second filter to filter out interfering signals of the second branch 93.

In some embodiments, the battery management system includes a processing module, and the processing module is configured to: when it is detected that an absolute value of the voltage difference between the first branch 91 and the second branch 93 is greater than or equal to an absolute value of a difference between U₁ and U₂, determine that the detection apparatus 5 detects no coolant leaked from the liquid cooling system 3, where U₁ is an absolute value of a difference between the first preset value and the second preset value, and U₂ is 0-1 V; and when it is detected that the absolute value of the voltage difference between the first branch 91 and the second branch 93 is smaller than or equal to U₃, determine that the detection apparatus 5 detects the coolant leaked from the liquid cooling system 3, where U₃ is 0-1 V and U₃ is smaller than the absolute value of the difference between U₁ and U₂.

As shown in FIG. 11, when there is no coolant leak, the first branch 91 and the second branch 93 are not connected, and the two branches are disconnected. After a coolant leak, the two probes are electrically connected when in contact with the coolant because the coolant is conductive, so that the first branch 91 and the second branch 93 are connected. The absolute value of the voltage difference between the first branch 91 and the second branch 93 will change before and after the connection. Therefore, whether the detection apparatus 5 detects the coolant can be determined by checking the absolute value of the voltage difference between the two branches.

Before the connection, a voltage value of the first branch 91 is the first preset value, and a voltage value of the second branch 93 is the second preset value. Theoretically, the absolute value of the voltage difference between the first branch 91 and the second branch 93 should be the absolute value U₁ of the difference between the first preset value and the second preset value. Considering factors such as the energy-consuming components or thermal consumption on the circuit, the actual absolute value of the voltage difference between the first branch 91 and the second branch 93 may be slightly smaller than U₁. A difference between the absolute value of the actual voltage difference between the first branch 91 and the second branch 93 and the absolute value of the theoretical voltage difference is smaller than U₂, for example, controlled between 0 V and 1 V U₂ may be 0 V, 0.2 V, 0.4 V, 0.5 V, 0.6 V, 0.8 V, 1 V, or the like. Certainly, in other embodiments, the value of U₂ may be set flexibly based on the actual situation. Setting U₂ can avoid the case of mistakenly determining that the detection apparatus 5 detects the coolant when the absolute value of the actual voltage difference between the first branch 91 and the second branch 93 is slightly smaller than U₁ due to factors such as energy-consuming components or thermal consumption on the circuit. This effectively improves the detection accuracy.

After the connection, the first branch 91 and the second branch 93 are connected into one path. In this case, the absolute value of the voltage difference between the first branch 91 and the second branch 93 should theoretically be 0. However, due to factors such as energy-consuming components or thermal consumption on the circuit, the absolute value of the actual voltage difference between the first branch 91 and the second branch 93 may be slightly greater than 0, for example, U₃, where U₃ is 0-1 V U₃ may be 0 V, 0.2 V, 0.4 V, 0.5 V, 0.6 V, 0.8 V, 1 V, or the like. Certainly, in other embodiments, the value of U₃ may be set flexibly based on the actual situation. Setting the absolute value of the voltage difference between the first branch 91 and the second branch 93 to be smaller than or equal to U₃ can avoid the case of mistakenly determining that the detection apparatus 5 detects no coolant when the absolute value of the actual voltage difference between the first branch 91 and the second branch 93 is slightly greater than 0 due to factors such as energy-consuming components or thermal consumption on the circuit. This effectively improves the detection accuracy.

As shown in FIG. 9, a distance d1 between the first probe 52 and the second probe 53 is 5 mm to 10 mm, for example, 5 mm, 6 mm, 7 mm, 8 mm, 9 mm or 10 mm.

An excessively great distance between the two probes may affect the sensitivity of their connection. An excessively small distance between the two probes may lead to a mistaken connection.

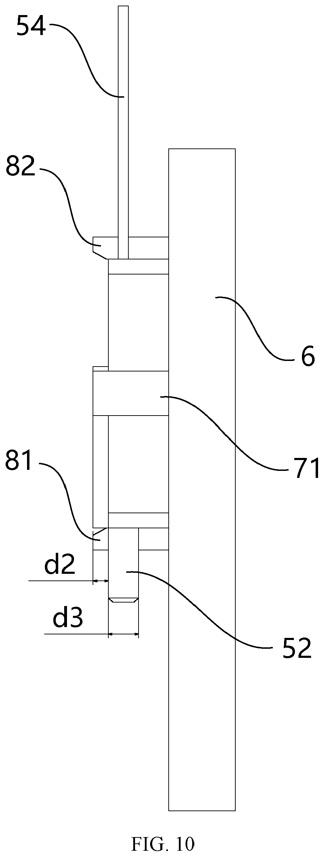

As shown in FIG. 10, the first probe 52 and the second probe 53 are both cylindrical, and the first probe 52 has a diameter d3 of 0.5 mm to 3 mm, for example, 0.5 mm, 1 mm, 2 mm, 3 mm, 4 mm, or 5 mm. The second probe 53 has a diameter of 0.5 mm to 3 mm, for example, 0.5 mm, 1 mm, 2 mm, 3 mm, 4 mm, or 5 mm. With the diameters of the probes set within this range, the detection requirements can be met and the volume of the detection apparatus 5 can also be effectively controlled. This avoids the case that the detection apparatus 5 is too large to be mounted easily, helping reduce costs.

This application further provides an electric device including the foregoing battery, where the battery is configured to supply electric energy to the electric device.

This application further provides a battery manufacturing method including:
providing a housing 1 having a bottom plate 11;
providing a battery cell 2, with the battery cell 2 disposed inside the housing 1;
providing a liquid cooling system 3 for cooling the battery cell 2 by using a coolant;
providing a detection apparatus 5 for detecting coolant leaked from the liquid cooling system 3, where the detection apparatus 5 includes a detection part; and
setting a detection position of the detection part to between the battery cell 2 and the bottom plate 11, so that the detection apparatus 5 can detect the leaked coolant before the leaked coolant comes into contact with the battery cell 2.

The electric device and the battery manufacturing method also have the positive effects of the foregoing battery embodiments. Details are not described herein again.

The following will describe the structures of batteries in some embodiments of this application with reference to FIG. 2 to FIG. 12.

As shown in FIG. 2 and FIG. 3, a battery 100 includes a housing 1, a battery cell 2, a liquid cooling system 3, and a spacer plate 4. The housing 1 includes a bottom plate 11 and a housing body 12. An opening is provided at the bottom of the housing body 12, and an accommodating space is provided inside the housing body 12 to accommodate a plurality of battery cells 2. The liquid cooling system 3 and the spacer plate 4 are also disposed inside the housing body 12. The liquid cooling system 3 is disposed at the bottom of the battery cells 2, and the spacer plate 4 is disposed at the bottom of the liquid cooling system 3. The bottom plate 11 covers the opening side of the housing body 12 to enclose the battery cells 2, the liquid cooling system 3, and the spacer plate 4 inside the housing 1.

As shown in FIG. 4, multiple rows of battery cells 2 are disposed inside the housing 1, and the multiple rows of battery cells 2 are arranged in different regions. One spacer plate 4 is disposed in the region where each battery cell 2 is located, and a detection apparatus 5 is mounted on a side edge of the spacer plate 4.

As shown in FIG. 5, one side edge of the spacer plate 4 is provided with a protruding portion protruding toward the battery cell 2, and the protruding portion has a recess 41 with an opening facing a direction away from the battery cell 2 or facing the bottom plate 11. The detection apparatus 5 is disposed in the recess 41.

The detection apparatus 5 includes a terminal 51, a first probe 52, a second probe 53, a first electrical connection wire 54, and a second electrical connection wire 55. The first probe 52 is connected to the first electrical connection wire 54 through the terminal 51, and the second probe 53 is connected to the second electrical connection wire 55 through the terminal 51.

The terminal 51 is an electrical connection part, and the terminal 51 has a shell made of an insulating material. In the embodiment illustrated in FIG. 5, the terminal 51 is in a square shape. In other embodiments, the terminal 51 may alternatively be in shapes such as rectangle or triangle.

An open portion is formed at a side of the recess 41 facing the edge of the spacer plate 4. The first probe 52 and the second probe 53 are connected to a side of the terminal 51 far away from the open portion, so that the first probe 52 and the second probe 53 can be protected by the side wall of the recess 41. This prevents the first probe 52 and the second probe 53 from interfering or colliding with other components, helping increase the service life of the probes. The first electrical connection wire 54 and the second electrical connection wire 55 are connected to a side of the terminal 51 close to the open portion, so that the first electrical connection wire 54 and the second electrical connection wire 55 extend out of the recess 41 and are connected to a battery management system.

To facilitate the mounting and fixing of the detection apparatus 5, the battery 100 further includes a mounting plate 6. The mounting plate 6 is disposed in the recess 41, and the detection apparatus 5 is mounted on the mounting plate 6. The shape and size of the mounting plate 6 can match the shape and size of the recess 41, so that the mounting plate 6 placed in the recess 41 will not waggle in the recess 41. This can improve the stability of the detection apparatus 5.

FIG. 5 is a bottom view. During use of the battery, the detection apparatus 5 is located below the mounting plate 6, and the detection apparatus 5 is closer to the bottom plate 11 than the mounting plate 6. Furthermore, in the embodiment illustrated in FIG. 5, after the detection apparatus 5 is mounted, a clearance 61 is present between the mounting plate 6 and the bottom of the recess 41. The clearance 61 allows the mounting plate 6 to be put into the recess 41 more easily. The clearance 61 can also prevent the mounting plate 6 from rubbing against the bottom of the recess 41, effectively protecting the mounting plate 6 and the spacer plate 4. The bottom of the recess 41 refers to a surface of the recess 41 opposite its opening.

To further improve the stability of the detection apparatus 5 and prevent the detection apparatus 5 from waggling inside the battery 100, the battery 100 further includes a connector, and the terminal 51 is fixed to the mounting plate 6 by using the connector.

The connector includes a first hook 71 and a second hook 72. The first hook 71 and the second hook 72 are disposed on the mounting plate 6 and clamped onto the terminal 51.

As shown in FIG. 5, the first hook 71 and the second hook 72 are mounted on one side of the mounting plate 6 close to the bottom plate 11. A convex portion is provided at one end of the first hook 71 and one end of the second hook 72 away from the mounting plate 6. The convex portions are close to each other. The convex portions have inclined surfaces, allowing the terminal 51 to be put into a space defined by the first hook 71 and the second hook 72. Moreover, the convex portions can restrain the terminal 51 after the terminal 51 is put into the space defined by the first hook 71 and the second hook 72, so as to fix the terminal 51.

As shown in FIG. 6 and FIG. 7, the first hook 71 and the second hook 72 are arranged on two sides of the terminal 51 to restrict the terminal 51 to move in a first direction, where the first direction is a direction in which the first hook 71 and the second hook 72 are connected.

As shown in FIG. 8 to FIG. 10, end surfaces of the ends of the first hook 71 and the second hook 72 away from the mounting plate 6 each include a plane, and a distance between the planes and the mounting plate 6 is greater than the distance between the terminal 51 and the mounting plate 6. Therefore, during use of the battery, the planes are in contact with the bottom plate 11, and a preset distance is present between the terminal 51 and the bottom plate 11.

One end of the first probe 52 and one end of the second probe 53 are connected inside the terminal 51, and a distance between the first probe 52 and the second probe 53 and the mounting plate 6 is also smaller than the distance between the end planes of the first hook 71 and the second hook 72 and the mounting plate 6.

As shown in FIG. 10, a distance d2 between an outer surface of the first probe 52 and the end plane of the first hook 71 is 1 mm to 5 mm. A distance between an outer surface of the second probe 53 and the end plane of the second hook 72 may also be 1 mm to 5 mm. Such distance can enable the first probe 52 and the second probe 53 to quickly detect the leaked coolant, and also prevent the coolant from soaking the battery cell 2 and other electrical components.

As shown in FIG. 5, and FIG. 7 to FIG. 9, the battery 100 further includes a positioning piece disposed on the mounting plate 6, where the positioning piece is used to limit the position of the terminal 51 relative to the mounting plate 6, so as to avoid contact between the detection part and the side wall of the recess 41.

The positioning piece includes a first positioning piece 81 and a second positioning piece 82. The first positioning piece 81 and the second positioning piece 82 are arranged on two sides of the terminal 51 to prevent the terminal 51 from moving in a second direction relative to the mounting plate 6, where the second direction is a direction in which the first positioning piece 81 and the second positioning piece 82 are connected. The second direction and the first direction are two directions that are not parallel to each other. In the embodiments illustrated in FIG. 5, and FIG. 7 to FIG. 9, the first direction is perpendicular to the second direction.

In the embodiments illustrated in FIG. 5, and FIG. 7 to FIG. 9, the first positioning piece 81 and the second positioning piece are similar to the first hook 71 and the second hook 72 in terms of structure, but different from the first hook 71 and the second hook 72, the first positioning piece 81 and the second positioning piece 82 do not have the convex portions. End surfaces of the ends of the first positioning piece 81 and the second positioning piece 82 away from the mounting plate 6 also each include a plane, and the planes are in contact with the bottom plate 11. The end surfaces of the first positioning piece 81, the second positioning piece 82, the first hook 71, and the second hook 72 are coplanar, so as to ensure the stability of the detection apparatus 5. In other embodiments, structures of the first positioning piece 81 and the second positioning piece 82 may be the same as or different from those of the first hook 71 and the second hook 72.

As shown in FIG. 9, the distance d1 between the first probe 52 and the second probe 53 is 5 mm to 10 mm. As shown in FIG. 10, the diameter d3 of the first probe 52 is 0.5 mm to 3 mm, and the diameter of the second probe 53 may also be 0.5 mm to 3 mm.

In the embodiments illustrated in FIG. 11 and FIG. 12, the first branch 91 is connected to a first voltage terminal 92. For example, the first voltage terminal 92 supplies a voltage of 5 V to the first branch 91. The second branch 93 is connected to a second voltage terminal 94. For example, the second voltage terminal 94 is grounded, that is, the second voltage terminal 94 supplies a voltage of 0 V to the second branch 93. A third resistor 90 is connected between the first branch 91 and the first voltage terminal 92, and a fourth resistor 99 is connected between the second branch 93 and the second voltage terminal 94.

A first resistor 95 and a first capacitor 96 are connected to the first branch 91. One end of the first capacitor 96 is connected to the first branch 91, and another end of the first capacitor 96 is grounded. A second resistor 97 and a second capacitor 98 are connected to the second branch 93. One end of the second capacitor 98 is connected to the second branch 93, and another end of the second capacitor 98 is grounded.

During operation of the battery, a first end of the first branch 91 and a first end of the second branch 93 are both connected to a battery management system (BMS). A second end of the first branch 91 is connected to the first electrical connection wire 54, the first electrical connection wire 54 is connected to the first probe 52, a second end of the second branch 93 is connected to the second electrical connection wire 55, and the second electrical connection wire 55 is connected to the second probe 53.

As shown in FIG. 11, when there is no coolant leak or the coolant has a liquid level lower than d2 (which may be 1 mm to 5 mm) and is not in contact with the first probe 52 and the second probe 53, the first probe 52 and the second probe 53 are not connected, the first branch 91 and the second branch 93 are not connected, and the absolute value of the voltage difference between the first branch 91 and the second branch 93 is greater than or equal to 4 V In other words, when it is detected that the absolute value of the voltage difference between the first branch 91 and the second branch 93 is greater than or equal to 4 V, this means that there is no coolant leak or the height of the leaked coolant is less than d2.

As shown in FIG. 12, when the height of the leaked coolant is greater than or equal to d2, the first probe 52 and the second probe 53 are in contact with the coolant and connected via the coolant, and the first branch 91 and the second branch 93 are also connected. In this case, the absolute value of the voltage difference between the first branch 91 and the second branch 93 is less than or equal to 1 V In other words, when it is detected that the absolute value of the voltage difference between the first branch 91 and the second branch 93 is less than or equal to 1 V, this means that there is a coolant leak and the height of the leaked coolant is greater than or equal to d2.

The first branch 91 and the second branch 93 are both connected to the battery management system. When it is detected that there is a coolant leak or the height of the leaked coolant reaches the warning limit, the battery management system can generate an alarm to notify the vehicle to close the on-off valve, so as to prevent safety accidents caused by continuous coolant leaking. Furthermore, in this embodiment of this application, the first probe 52 and the second probe 53 are arranged on one side of the battery cell 2 close to the bottom plate 11. Therefore, the leaked coolant can be detected before the coolant comes into contact with the battery cell 2, thereby effectively protecting the battery cell 2 and preventing the battery cell 2 from being soaked in the coolant.

The battery provided in some embodiments of this application can quickly detect a coolant leak, effectively ensuring the use safety of the battery. Compared with the technical solution in which a coolant leak is detected using an insulation test method, the solution provided in this embodiment of this application can also avoid false alarms on dielectric voltage withstanding caused by moisture, improving the detection accuracy.

In the battery embodiment provided in this application, the recess is provided at the bottom of the spacer plate and the open portion is provided at a side of the recess close to an edge. In this way, the detection apparatus can be pushed into the recess from the side face to complete the mounting of the detection apparatus, without first placing the entire battery upside down. This greatly facilitates the mounting.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery comprising:
a housing (1) having a bottom plate (11);
a battery cell (2) disposed inside the housing (1);
a liquid cooling system (3) configured to cool the battery cell (2) by using a coolant; and
a detection apparatus (5) configured to detect coolant leaked from the liquid cooling system (3), wherein the detection apparatus (5) comprises a detection part with a detection position set between the battery cell (2) and the bottom plate (11).

2. The battery according to claim 1, wherein the detection position of the detection part is 1 mm to 5 mm above the bottom plate (11).

3. The battery according to claim 1, wherein the detection part is disposed on the bottom plate (11).

4. The battery according to claim 1 or 2, further comprising a spacer plate (4) disposed between the battery cell (2) and the bottom plate (11), wherein the spacer plate (4) has a recess (41) with an opening facing the bottom plate (11), the detection apparatus (5) comprises a terminal (51) disposed in the recess (41), and the terminal (51) is connected to the detection part.

5. The battery according to claim 4, wherein the detection part comprises a probe connected to the terminal (51), the recess (41) is located on an edge of the spacer plate (4) and an open portion is formed at a side facing the edge, and the probe extends from the terminal (51) in a direction away from the open portion.

6. The battery according to any one of claims 1 to 5, further comprising a first electrical connection wire (54), a second electrical connection wire (55), and a battery management system, wherein the detection part comprises a first probe (52) and a second probe (53), the first electrical connection wire (54) connects the first probe (52) and the battery management system, and the second electrical connection wire (55) connects the second probe (53) and the battery management system.

7. The battery according to claim 6, wherein the first probe (52), the first electrical connection wire (54), and the battery management system are connected to form a first branch (91), the first branch (91) is provided with a first voltage terminal (92), and the first voltage terminal (92) is configured to provide the first branch (91) with a voltage of a first preset value; and the second probe (53), the second electrical connection wire (55), and the battery management system are connected to form a second branch (93), the second branch (93) is provided with a second voltage terminal (94), the second voltage terminal (94) is configured to provide the second branch (93) with a voltage of a second preset value, and the battery management system is configured to determine whether the detection apparatus (5) detects the coolant leaked from the liquid cooling system (3), by detecting a voltage difference between the first branch (91) and the second branch (93).

8. The battery according to claim 7, further comprising a first resistor (95), a first capacitor (96), a second resistor (97), and a second capacitor (98), wherein the first resistor (95) is connected to the first branch (91), one end of the first capacitor (96) is connected to the first branch (91) and another end of the first capacitor (96) is grounded, the second resistor (97) is connected to the second branch (93), and one end of the second capacitor (98) is connected to the second branch (93) and another end of the second capacitor (98) is grounded.

9. The battery according to claim 7 or 8, wherein the battery management system comprises a processing module, and the processing module is configured to: when it is detected that an absolute value of the voltage difference between the first branch (91) and the second branch (93) is greater than or equal to an absolute value of a difference between U₁ and U₂, determine that the detection apparatus (5) detects no coolant leaked from the liquid cooling system (3), wherein U₁ is an absolute value of a difference between the first preset value and the second preset value, and U₂ is 0-1 V; and when it is detected that the absolute value of the voltage difference between the first branch (91) and the second branch (93) is smaller than or equal to U₃, determine that the detection apparatus (5) detects the coolant leaked from the liquid cooling system (3), wherein U₃ is 0-1 V and U₃ is smaller than the absolute value of the difference between U₁ and U₂.

10. The battery according to any one of claims 6 to 9, wherein a distance between the first probe (52) and the second probe (53) is 5 mm to 10 mm.

11. The battery according to any one of claims 6 to 10, wherein the first probe (52) and the second probe (53) are both cylindrical, and the first probe (52) has a diameter of 0.5 mm to 3 mm and/or the second probe (53) has a diameter of 0.5 mm to 3 mm.

12. An electric device comprising the battery according to any one of claims 1 to 11, wherein the battery is configured to supply electric energy to the electric device.

13. A battery manufacturing method comprising:
providing a housing (1) having a bottom plate (11);
providing a battery cell (2), with the battery cell (2) disposed inside the housing (1);
providing a liquid cooling system (3) for cooling the battery cell (2) by using a coolant;
providing a detection apparatus (5) for detecting coolant leaked from the liquid cooling system (3), wherein the detection apparatus (5) comprises a detection part; and
setting a detection position of the detection part to between the battery cell (2) and the bottom plate (11).
